(19) **Europäisches Patentamt / European Patent Office / Office européen des brevets**

(11) **EP 1 286 920 B1**

(12) **FASCICULE DE BREVET EUROPEEN**

(45) Date de publication et mention
de la délivrance du brevet:
**25.04.2007 Bulletin 2007/17**

(51) Int Cl.:
*C01G 3/02* $^{(2006.01)}$     *C01F 17/00* $^{(2006.01)}$
*C01B 13/36* $^{(2006.01)}$

(21) Numéro de dépôt: **01945382.8**

(22) Date de dépôt: **08.06.2001**

(86) Numéro de dépôt international:
**PCT/FR2001/001782**

(87) Numéro de publication internationale:
**WO 2001/094263 (13.12.2001 Gazette 2001/50)**

(54) **PROCEDE DE PREPARATION DE COLLOIDES DE PARTICULES PROVENANT DE L'HYDROLYSE D'UN SEL D'UN CATION METALLIQUE**

VERFAHREN ZUR HERSTELLUNG VON KOLLOIDEN DURCH HYDROLYSE VON METALLISCHEN KATIONEN

METHOD FOR PREPARING COLLOIDAL PARTICLES DERIVED FROM HYDROLYSIS OF A METAL CATION SALT

(84) Etats contractants désignés:
**AT BE CH CY DE DK ES FI FR GB GR IE IT LI LU MC NL PT SE TR**

(30) Priorité: **08.06.2000 US 590118**

(43) Date de publication de la demande:
**05.03.2003 Bulletin 2003/10**

(73) Titulaire: **RHODIA CHIMIE**
**92512 Boulogne Billancourt Cedex (FR)**

(72) Inventeurs:
• **ANTHONY, Olivier**
**F-95880 Enghien les Bains (FR)**
• **CHANE-CHING, Jean-Yves**
**F-95600 Eaubonne (FR)**
• **DESTARAC, Mathias**
**F-75005 Paris (FR)**

• **GERARDIN, Corine**
**F-34790 Grabels (FR)**

(74) Mandataire: **Delenne, Marc et al**
**Rhodia Services,**
**Direction de la Propriété Industrielle,**
**40, rue de la Haie-Coq**
**93306 Aubervilliers Cedex (FR)**

(56) Documents cités:
EP-A- 0 395 243     WO-A-00/10913
CH-A- 566 809     US-A- 3 826 755
US-A- 4 478 795

• **PATENT ABSTRACTS OF JAPAN vol. 007, no. 053, 3 mars 1983 (1983-03-03) & JP 57 202311 A (NIPPON SHOKUBAI), 11 décembre 1982 (1982-12-11)**

**EP 1 286 920 B1**

**Description**

La présente invention a pour objet un procédé de préparation de particules provenant de l'hydrolyse d'un sel d'un cation métallique.

Il est déjà connu de préparer des cristaux de phosphate de calcium en présence de copolymères comportant deux blocs hydrophiles de nature différente par ancrage de chaîne alkyle (Antonietti, Mann, Chem. Eur. J., 1998). Il est également connu de contrôler la croissance de cristaux de carbonate de calcium (J.M. Marentette, Adv. Materials, 1997 ; et M. Antonietti, Langmuir, 1998 ; ainsi que H. Colfen et M. Antonietti, Langmuir, 1998, 1998, 14, 582-589). On sait également contrôler la croissance de métaux nobles en présence de copolymères à blocs comportant au moins un bloc hydrophile et au moins un bloc hydrophobe (S. Foster, M. Antonietti, Adv. Materials, 1997).

La présente invention propose un procédé de préparation de particules minérales sous forme de colloïdes en dispersion aqueuse de taille contrôlée à partir d'un précurseur, comprenant :

    a) la mise en solution aqueuse dudit précurseur qui est un sel minéral d'un cation métallique;
    b) la complexation du produit obtenu en a) par au moins un copolymère à bloc hydrosoluble comportant au moins un bloc hydrophyle anionique complexant et au moins un bloc hydrophile nonionique stabilisant ; et,
    c) l'hydrolyse partielle ou totale dudit précurseur pour obtenir une croissance contrôlée des particules minérales sous forme de dispersion aqueuse.

Selon une variante, le procédé de l'invention comporte en outre après l'étape a): $a_1$) l'hydrolyse partielle du produit obtenu en a).

Les précurseurs minéraux sont de façon générale des ions minéraux, des clusters minéraux, des particules ultrafines dont la taille de particule est inférieure à 100 nm, ou leur mélanges.

Plus particulièrement les précurseurs minéraux sont des sels, oxydes, ou hydroxydes d'un cation d'un élément métallique choisi parmi un élément de la colonne 3b (colonne du scandium) à la colonne 5a (colonne de l'azote) de la classification périodique de Mandeleieff, y compris les terres rares, et les actinides. Sont plus particulièrement préférés dans le cadre de la présente invention, les ions ou métaux multi-valents et plus particulièrement les terres rares, en particulier le cérium, l'yttrium, les métaux précieux et les métaux de la mine du platine, à savoir l'or, l'argent, le platine, l'iridium, le ruthénium, le rhodium, l'osmium et le paladium, les métaux de transition, plus particulièrement, fer, cobalt et nickel, ainsi que le cuivre le zinc et l'aluminium.

L'hydrolyse partielle optionnelle de l'étape $a_1$) et l'hydrolyse de l'étape c) sont de préférence effectuées à l'aide de bases minérales tels que les hydroxydes alcalins ou alcalino-terreux parmi lesquels on peut citer la soude, l'ammoniaque, la potasse, l'hydroxyde de potassium et l'hydroxyde de calcium. Si, lors de la mise en oeuvre du procédé de l'invention, il est nécessaire d'utiliser n moles de base pour réaliser l'hydrolyse désirée du cation du précurseur minéral, on recommande d'utiliser $n_1$ moles de base lors de l'étape optionnelle $a_1$) suivie de l'utilisation de $n_2$ moles de base lors de la mise en oeuvre de l'étape c) avec la relation $n = n_1 + n_2$. On entend par hydrolyse désirée selon la présente invention, l'hydrolyse finale cumulée obtenue après la mise en oeuvre de l'étape optionnelle $a_1$) suivie de de la mise en oeuvre de l'étape c). Cette hydrolyse finale peut être soit partielle soit totale. L'hydrolyse totale est obtenue quand n est égal à la charge du cation métallique et conduit à un oxyde ou hydroxyde présent dans la particule minérale finale. Dans le cas où l'hydrolyse finale est partielle, on peut obtenir dans la particule minérale finale des sels d'hydroxyde comme par exemple $Cu_2(OH)_3Cl$. Dans beaucoup de cas, de façon à obtenir des particules de qualité, il est recommandé d'utiliser une quantité sensiblement stoechiométrique de base (n moles) en vue de transformer totalement l'anion ou le métal contenu dans le précurseur minéral en oxyde ou en hydroxyde. Selon une variante préférée n, $n_1$ et $n_2$ sont reliés par les équations :

$$0,2 \times n \leq n_1 \leq 0,8\, n \ ;$$

et

$$0,2 \times n \leq n_2 \leq 0,8\, n,$$

et

$$n_1 + n_2 = 1.$$

Les étapes a), $a_1$), b) et c) sont mises en oeuvre généralement dans une solution aqueuse réactionnelle dont la température est la température ambiante (environ 20 °C) et à pression atmosphérique bien qu'une pression inférieure ou supérieure à cette pression atmosphérique puisse être utilisée. Il est toutefois possible de porter la température du milieu réactionnel à une température comprise entre la température ambiante et la température d'ébullition de ce milieu qui est voisine généralement de 100 °C. Les étapes a), $a_1$), b) et c) sont mises en oeuvre dans une solution aqueuse réactionnelle dont le pH est réglé de préférence entre 5 et 12, de façon préférée à un pH au moins égal au pKa du bloc anionique du copolymère.

Le procédé selon l'invention peut comporter immédiatement après l'étape c), une étape supplémentaire d) de mûrissement de la dispersion colloïde à une température comprise généralement entre 50 °C et une température inférieure ou égale au point d'ébullition de ladite dispersion. Eventuellement après l'étape c) ou d), le procédé selon l'invention peut comporter une étape supplémentaire de concentration de la dispersion. Cette étape supplémentaire de concentration peut être notamment effectuée par ultrafiltration, dialyse, séchage/redispersion dans l'eau, précipitation/redispersion dans l'eau, et centrifugation/redispersion dans l'eau .

La taille de plus de 80 % environ des particules colloïdes obtenues à la fin de l'étape c) est généralement comprise entre 2 et 500 nm, de préférence entre 2 et 200 nm. Un moyen pour régler la taille des particules colloïdes est d'utiliser une plus ou moins grande quantité de moles n1 au cours de l'étape a). En effet plus n1 est grand et se rapproche de n et plus la taille des particules est grande.

Le copolymère à bloc hydrosoluble comporte au moins un bloc hydrophyle anionique complexant et au moins un bloc hydrophile nonionique stabilisant. Ces copolymères présentent de préférence une masse moléculaire en nombre Mn comprise de préférence entre 2000 et 20 000, de préférence entre 3000 et 10 000 g/mole. De préférence on utilise un copolymère présentant un bloc hydrophile non ionique de plus grande masse que le bloc ionique complexant.

Les blocs anioniques incluent par exemple l'acide polyméthacrylique et ses sels, l'acide polyacrylique et ses sels, les copolymères de l'acide méthacrylique et ses sels, les copolymères de l'acide acrylique et ses sels, l'héparine, le polyphosphate, les polyamino acides tels que l'acide polyaspartique, l'acide polyglutaminique, l'acide polymalique, l'acide polylactique. Les blocs anioniques préférés dans le cadre de la présente invention sont les blocs présentant dans la chaîne polymère des groupes carboxyliques. Des exemples de monomères permettant de préparer de tels blocs sont l'acide acrylique, l'acide aspartique, l'acide citraconique, l'acide p-hydroxy cinnamique, l'acide trans-glutaconique, l'acide glutamique, l'acide itaconique, l'acide linoléique, l'acide méthacrylique, l'acide maléique, l'acide oléique, l'anhydride maléique, l'acide mésaconique, l'acide 2-propène 1-sulfonique acide, et l'acide vinylsulfonique.

Les blocs nonioniques incluent par exemple les polyétherglycols autrement dit le polyoxyde d'éthylène, le polyoxyde de propylène, les copolymères d'oxyde d'éthylène et d'oxyde de propylène, les polysaccharides, les polyacrylamides, les esters polyacryliques, le polyméthacrylamide, l'alcohol polyvinylique, la polyvinyl pyrrolidone, les polyortho esters, les polyamino acides, et les polyglycérols. Les blocs nonioniques préférés dans le cadre de la présente invention sont les blocs polyhydroxyethylacrylates et l'alcool polyvinylique. Pour préparer les polymères à blocs on peut par exemple utiliser la polymérisation anionique avec addition sequentielle de 2 monomères comme par exemple décrit par Scmolka, J. Am. Oil Chem. Soc. 1977, 54, 110 ; ou bien encore Wilczek-Veraet al., Macromolécules 1996, 29, 4036. Un autre procédé utilisable consiste à initialiser la polymérisation d'un bloc polymère à chacune des extrémités d'un autre bloc polymère comme par exemple décrit par Katayose et Kataoka, Proc. Intern. Symp. Control. Rel. Bioact. Materials, 1996, 23, 899.

Dans le cadre de la présente invention, on recommande d'utiliser la polymérisation vivante ou contrôlée comme définie par Quirk et Lee (Polymer International 27, 359 (1992).

En effet ce procédé particulier permet de préparer des polymères de dispersite étroite et dont la longueur et la composition des blocs sont contrôlés par la stoechiométrie et le degré de conversion. Dans le cadre de ce type de polymérisation, sont plus particulièrement recommandés les copolymères à blocs qui peuvent être obtenus par tout procédé de polymérisation dite vivante ou contrôlée tel que, par exemple :

- la polymérisation radicalaire contrôlée par les xanthates selon l'enseignement de la demande WO 98/58974,
- la polymérisation radicalaire contrôlée par les dithioesters selon l'enseignement de la demande WO 97/01478
- la polymérisation à l'aide de précurseurs nitroxydes selon l'enseignement de la demande WO 99/03894,
- la polymérisation radicalaire contrôlée par les dithiocarbamates selon l'enseignement de la demande WO 99/31144,
- la polymérisation radicalaire par transfert d'atome (ATRP) selon l'enseignement de la demande WO 96/30421,
- la polymérisation radicalaire contrôlée par les iniferters selon l'enseignement de Otu et al., Makromol. Chem. Rapid. Commun., 3, 127 (1982),
- la polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolécules, 28, 2093 (1995)),
- la polymérisation par transfert de groupe selon l'enseignement de Webster O.W. "Group Transfer Polymerization", p. 580-588 de l'"Encyclopedia of Polymer Science and Engineering", vol.7 et H.F. Mark, N.M. Bikales, C.G. Overberger and G. Menges, Eds., Wiley Interscience, New York, 1987,
- la polymérisation radicalaire contrôlée par les dérivés du tetraphényléthane (D. Braun et al. Macromol.Symp. 111,63 (1996)),
- la polymérisation radicalaire contrôlée par les complexes organocobalt (Wayland et al. J.Am.Chem.Soc. 116,7973 (1994)) .

Un autre moyen pour régler la taille des particules colloïdes est de faire varier le taux de copolymère complexant qui est le rapport molaire entre le groupe complexant du ou des blocs hydrophyle(s) anionique(s) complexant(s) et le nombre de mole du cation métallique contenu dans le précurseur minéral et qui est transformé en oxyde ou hydroxyde. Ce rapport est généralement compris entre 0,05 et 10, plus particulièrement entre 0,1 et 1. De façon générale, plus ce rapport est élevé et plus la taille des particules colloïdes est petite.

Parmi les applications possibles pour les systèmes colloïdaux préparés par le procédé selon l'invention, on peut citer le polissage mécanique d'objets durs tels que des pièces métalliques, l'élaboration de pigments, de céramiques mixtes pour l'électronique, le renforcement de matrices polymériques, les dispersions fongicides ou biocides et le captage de dérivés soufrés et, plus généralement, le captage des mauvaises odeurs.

Les exemples suivants illustrent l'invention sans en limiter la portée.

Exemple 1 : Synthèse d'un copolymère dibloc Polyacide acrylique-b-polyacrylate de 2-hydroxyéthyle (PAA-b-PHEA):

*1°partie : synthèse du premier bloc PAA :*

30g d'acide acrylique; 6.24 g de 2-mercaptopropionic acid methyl ester O-ethyl dithiocarbonate (S-propionyl O-ethyl xanthate), 0.245 g d'AIBN (azobisisobutyronitrile) et 125 ml d'acétone sont additionnés à température ambiante dans un ballon de 250 ml muni d'un agitateur magnétique. Le ballon surmonté d'un réfrigérant est ensuite placé dans un bain d'huile maintenu à 70°C pendant 18 heures. La solution est ensuite concentrée au rotavapor, puis le polymère est précipité dans l'acétonitrile et séché à l'étuve sous vide.

Une analyse GPC (chromatographie en phase vapeur) dans l'eau (détection UV à 290 nm) du polymère obtenu confirme la présence du xanthate en bout de chaîne, de même qu'une analyse RMN $^1$H et MALDI-TOF MS.
Conversion : 88.5%

$M_n$ (masse molaire moyenne en nombre)=1050 g / mol (déterminé par RMN $^1$H)

*2°partie : synthèse du dibloc PAA-b-PHEA :*

5g de polyacide acrylique issu de la première étape sont additionnés dans un ballon en verre de 250 ml, de même que 37g d'eau, 74 g d'acétone, 4 g d'acrylate de 2-hydroxyéthyle (HEA) et 0.04 g d'AIBN. Le ballon surmonté d'un réfrigérant est ensuite placé dans un bain d'huile maintenu à 70°C. 4 g de HEA sont additionnés toutes les 15 mns pendant 2h45mns, de même que 0.04 g d'AIBN après 1 heure et 2 heures de réaction. La réaction est poursuivie pendant 20 heures. La solution est ensuite concentrée au rotavapor, puis le polymère est précipité dans l'éther et séché à l'étuve sous vide.
Rendement : 94.6%

$M_n$=12100 g / mol (déterminé par GPC aqueuse, basé sur des étalons de polyoxyde d'éthylène).

Exemple 2: Dispersion aqueuse colloïdale d'hydroxyde de cuivre stabilisée par un copolymère à blocs PAA-b-PHEA, AA/Cu=0.3.

On verse dans un becher 3 ml d'une solution de $CuCl_2$ à $8.10^{-3}$ mol/l. On ajoute, sous agitation magnétique, 150 $\mu$l d'une solution aqueuse de NaOH à 0.2 mol/l.

On attend 10 minutes. Le taux de préhydroiyse du cuivre est $h_1$=[OH]/[Al]=1.25.

On ajoute sous agitation 200.1 mg d'une solution aqueuse de copolymère PAA-b-PHEA décrit dans l'exemple 1 à 2.89% en poids, le pH de la solution de copolymère ayant préalablement été ajusté à 5.5. Le rapport molaire monomère AA/Cu vaut 0.3.

On ajoute ensuite 90 $\mu$l de NaOH (0.2 mol/l). On complète la solution à 4.5 ml avec de l'eau déionisée. La concentration molaire en cuivre vaut $5.33 \cdot 10^{-3}$ mol/l.

La suspension obtenue est bleue, turbide et stable. Le pH vaut 7.2.

Le diamètre hydrodynamique des particules mesuré par diffusion dynamique de la lumière est de 170 nm.

Exemple 3: Dispersion aqueuse colloïdale d'hydroxyde de cuivre stabilisée par un copolymère à blocs PAA-b-PHEA, AA/Cu=1.

On verse dans un becher 3 ml d'une solution de $CuCl_2$ à $8.10^{-3}$ mol/l. On ajoute,

sous agitation magnétique, 150 $\mu$l d'une solution aqueuse de NaOH à 0.2 mol/l.

On attend 10 minutes. Le taux de préhydrolyse du cuivre est $h_1$=[OH]/[Al]=1.25.

On ajoute sous agitation 667 mg d'une solution aqueuse de copolymère PAA-b-PHEA décrit dans l'exemple 1 à 2.89% en poids, le pH de la solution de copolymère ayant préalablement été ajusté à 5.5. Le rapport molaire monomère AA/Cu vaut 1.

Le diamètre hydrodynamique des agrégats en suspension mesure par diffusion dynamique de la lumière est de 130 nm.

On ajoute ensuite à cette même suspension 90 $\mu$l de NaOH (0.2 mol/l). On complète enfin la solution à 4.5 ml avec de l'eau déionisée. La concentration molaire en cuivre vaut $5.33 \cdot 10^{-3}$ mol/l.

La suspension obtenue est bleue, turbide et stable.

Le diamètre hydrodynamique des particules mesuré par diffusion dynamique de la lumière est de 130 nm.

Exemple 4 : Dispersion aqueuse d'agrégats à base de cuivre et de copolymère à blocs PAA-b-PHEA, AA/Cu=0.3.

On verse dans un becher 3 ml d'une solution aqueuse de $CuCl_2$ à $8.10^{-3}$ mol/l. On n'effectue pas de préhydrolyse.

On ajoute sous agitation 200.1 mg d'une solution aqueuse de copolymère PAA-b-PHEA décrit dans l'exemple 1 à 2.89% en poids, le pH de la solution de copolymère ayant préalablement été ajusté à 5.5. Le rapport molaire monomère

AA/Cu vaut 0.3. On complète enfin la solution à 4.5 ml avec de l'eau déionisée.

La concentration molaire en cuivre vaut $5.33 \cdot 10^{-3}$ mol/l.

Le diamètre hydrodynamique des agrégats mesuré par diffusion dynamique de la lumière est de 35 nm.

Exemple 5: Dispersion aqueuse colloïdale d'hydroxyde d'aluminium stabilisée par un copolymère à blocs PAA-b-PHEA, AA/Al=0.3.

On verse dans un ballon surmonté d'un réfrigérant 15 ml d'une solution aqueuse de $AlCl_3$ à 0.3 mol/l. On chauffe la solution à 90C. On ajoute, sous agitation magnétique, 22.41 ml d'une solution aqueuse de NaOH à 0.5 mol/l, en 10 minutes. Le taux de préhydrolyse de l'aluminium est $h_1=[OH]/[Al]=2.46$.

On laisse refroidir la solution jusqu'à température ambiante. La concentration en aluminium est de 0.121 mol/l. On dilue cette solution 10 fois.

On prélève 7 ml de cette solution d'aluminium préhydrolysée. On ajoute sous agitation 165.1 mg d'une solution aqueuse de copolymère PAA-b-PHEA décrit dans l'exemple 1 à 2.3 % en poids, le pH de la solution de copolymère ayant préalablement été ajusté à 5.5. Le rapport molaire monomère AA/Al vaut 0.3.

On ajoute ensuite 90 μl de NaOH (0.2 mol/l). On complète la solution à 14 ml avec de l'eau déionisée. La concentration molaire en aluminium: $6.05 \cdot 10^{-3}$ mol/l.

Le diamètre hydrodynamique des particules mesuré par diffusion dynamique de la lumière est de 45 nm.

Exemple 6: Synthèse d'un copolymère dibloc polyacrylate d'éthyle-b-polyacétate de vinyle (PAEt-b-PVAc):

Dans un réacteur à double enveloppe de 4 L muni d'une pâle d'agitation sont introduits à 30°C : 1411 g d'eau, 0.88 g de carbonate de sodium et 23.98 g de sodium dodecyl sulphate. Sous agitation, le réacteur est purgé par une courant d'azote et chauffé jusqu'à atteindre 85°C. Lors de la montée en température, à 80°C, sont introduits 1.63 g d'acide méthacrylique, 31.71 g d'acrylate d'éthyle et 4.96 g de S-propionyl O-ethyl xanthate. A 85°C est introduite une solution de 1.34 g de persulfate d'ammonium dans 2.67 g d'eau. Ensuite, un mélange de 285.48 g d'acrylate d'éthyle et 15.03 g d'acide méthacrylique est additionné en continu pendant une heure. Le système est maintenu à 85°C pendant 45 minutes supplémentaires, temps au bout duquel un échantillon est prélevé pour analyse GPC : (chromatographie en phase vapeur et $M_n$: masse moléculaire en nombre,

$M_w$ ; masse moléculaire en poids)

$$M_n=12600 \text{ g / mol}$$

$$M_w/M_n=1.97$$

En maintenant le réacteur à 85°C, la synthèse du copolymère dibloc est réalisée en additionnant 476 g d'acétate de vinyle pendant 1heure10 minutes, de même qu'un mélange de 60 g d'eau, 1.26 g de carbonate de sodium et 0.35 g de persulfate d'ammonium pendant la même période. Une fois l'introduction finie, la réaction est poursuivie pendant 30 mn. Ensuite, 1.58 g de perbenzoate de t-butyle sont ajoutés à la réaction. Puis, une solution d'acide érythorbique dans 30 g d'eau est ajoutée au réacteur, en continu pendant un heure. A la fin de l'addition, le réacteur est refroidi. Un échantillon est prélevé pour analyse :

$$M_n=27900 \text{ g/mol}$$

$$M_w/M_n=2.47$$

Exemple 7: Synthèse d'un copolymère dibloc poly(acide acrylique)-b-poly(alcool vinylique) (PAA-b-PAV) par hydrolyse basique du coplymère PAEt-b-PVAc décrit dans l'exemple 6:

L'hydrolyse est effectuée dans le réacteur de synthèse du polymère dibloc, sur un équivalent de 400 g de matière sèche (soit 1281 g de latex à 31.22 % d'extrait sec). Le pH du latex est ajusté à 8 avec une solution de soude 1 N. Le réacteur est chauffé à 60°C et maintenu sous courant d'azote. Sous une forte agitation, 1077 g de soude 4N sont additionnés pendant 1 heure. Le système est maintenu à cette température pendant 11 heures. L'extrait sec final est de 13.6%. Un échantillon prélevé en fin de réaction est analysé par RMN[1]H. L'analyse confirme la disparition des pics caractéristiques des esters acryliques et du groupement acétate.

Exemple 8: Dispersion colloïdale aqueuse de $CeO_2$, stabilisée par un copolymère PVA-b-PA (poly vinylacrylate/poly acrylate)

On verse dans un bécher 10 g de dispersion de copolymère PVA-PA décrit dans l'exemple 7 à 4% poids. Le pH de la dispersion est préalablement ajusté à pH 5,5 A cette dispersion, mise sous agitation, 1,2 cm3 de solution de nitrate céreux à 0,47M sont rajoutés à température ambiante, en 30 mn à l'aide d'une micro-seringue.

On réalise ensuite la précipitation à pH 8,5 par de l'ammoniaque 1M.

On porte à 80°C une nuit.

On obtient une dispersion colloïdale.

Le rapport molaire X= (monomère PAA / Ce)=5

La taille des colloïdes est d'environ 3 nm et est déterminée par cryo-microscopie électronique à transmission (Cryo-TEM).

Exemple 9: Synthèse d'un copolymère dibloc polyacide acrylique-b-polyacrylate de 2-hydroxyéthyle (PAA-b-PHEA):

*1°partie : synthèse du premier bloc PAA :*

20g d'acide acrylique, 1.39 g de 2-mercaptopropionic acid methyl ester O-ethyl dithiocarbonate (S-propionyl O-ethyl xanthate), 0.164 g d'AIBN (azobisisobutyronitrile) et 83 ml d'acétone sont additionnés à température ambiante dans un ballon de 250 ml muni d'un agitateur magnétique. Le ballon surmonté d'un réfrigérant est ensuite placé dans un bain d'huile maintenu à 70°C pendant 18 heures. La solution est ensuite concentrée au rotavapor, puis le polymère est précipité dans l'acétonitrile et séché à l'étuve sous vide.
Une analyse GPC dans l'eau (détection UV à 290 nm) du polymère obtenu confirme la présence du xanthate en bout de chaîne, de même qu'une analyse RMN $^1$H et MALDI-TOF MS.
Conversion : 93.5%
$M_n$ (masse moléculaire moyenne en nombre)=2800 g/mol (déterminé par RMN $^1$H)

2°partie : synthèse du dibloc PAA-b-PHEA :

8g de polyacide acrylique issu de la première étape sont additionnés dans un ballon en verre de 250 ml, de même que 0.021 g d'AIBN, 52g d'eau et 104 g d'acétone. Le ballon surmonté d'un réfrigérant est ensuite placé dans un bain d'huile maintenu à 70°C. 40 g d'acrylate de 2-hydroxyéthyle (HEA) sont ensuite additionnés en continu pendant 3 heures, de même que deux portions de 0.021 g d'AIBN après 1 heure et deux heures de réaction. La réaction est poursuivie pendant 20 heures. La solution est ensuite concentrée au rotavapor, puis le polymère est précipité dans l'éther et séché à l'étuve sous vide.
Rendement : 94.6%
$M_n$=11100 g/mol (déterminé par GPC aqueuse, basé sur des étalons de polyoxyde d'éthylène)

Exemple 10 : Dispersion colloïdale aqueuse de Ce0$_2$ , stabilisée par un copolymère PHEA-b-PA (poly 2-hydroxyethyl acrylate-b-poly acrylate)

On verse dans un bécher 6,8 cc d'une dispersion de PAA-b-PHEA décrit dans l'exemple 9 à 34,6 g/l préalablement ajustée à pH 5,5. A cette dispersion mise sous agitation on additionne à température ambiante, en 30 mn à l'aide d'un pousse seringue 6,8 cc d'une solution 0,1 M en nitrate céreux .

On réalise ensuite la précipitation à pH 8,5 par addition de 6 cc d'ammoniaque 1 M en environ 2 mn. Le pH est alors stable au cours du temps.

On porte à 80°C une nuit.

On obtient une dispersion colloïdale.

Le rapport molaire X=(monomère PAA/Ce)=1 et la concentration en Ce est de 0,035M.

Par microscopie électronique à transmission TEM, on observe la présence d'agrégats d'environ 20 à 30 nm, constitués par des objets élémentaires de 8 nm.

Exemple 11 : Dispersion colloïdale aqueuse de La (OH)$_3$-Fe(OH)$_3$

Une solution de nitrate de La et de Fe est élaborée comme suit :

Dans un bécher, on additionne 0,18 ml de solution de La(NO$_3$)$_3$ à 2,76 mole/l (soit 0,497 mM de La) que l'on dilue par 3 cm3 d'eau déminéralisée. L'ensemble est mis sous agitation. On additionne ensuite 0,2 g de Fe(NO$_3$)$_3$, $_x$H$_2$O (soit 0,5 mM de Fe) et on complète à 10 cc par de l'eau déminéralisée.

La solution obtenue possède un rapport molaire La/Fe=1 et une concentration 0,1 M(La+Fe)

Le pH de la solution est pH 2,2.

On verse dans un bécher 6,8 d'une dispersion de PAA-b-PHEA décrit dans l'exemple 9 à 34,6 g/l préalablement ajustée à pH 5,5. A cette dispersion mise sous agitation on additionne à température ambiante , en 30 mn à l'aide d'un pousse seringue 6,8 cc de la solution 0,1 M (La + Fe) préparée ci-dessus.

On réalise ensuite la précipitation à pH 8,5 par de l'ammoniaque 1 M.

On obtient une dispersion colloïdale .

Le rapport molaire « monomère PAA / La+Fe » = 1

Par TEM, nous observons des objets élémentaires de taille 3 nm, agrégés sous forme linéaire de longueur 50 à 100 nm.

Exemple 12 : Dispersion colloïdale aqueuse de Y(OH)$_3$ , stabilisée par PHEA-b-PA

On verse dans un bécher 13,6 cc d'une dispersion de PAA-b-PHEA décrit dans l'exemple 9 à 34,6 g/l préalablement ajustée à pH 5,5. A cette dispersion mise sous agitation on additionne à température ambiante , en 30 mn à l'aide d'un pousse seringue 13,6 cc d'une solution 0,1 M en nitrate d'yttrium.

On réalise ensuite la précipitation à pH 8,5 par addition pendant environ 14 mn de 14 cc d'ammoniaque 1 M.

On obtient une dispersion colloïdale.

Le rapport molaire X=(Monomère PAA/ Y)=1 et la concentration en Y= 0,033M

La taille moyenne des colloïdes est déterminée égale à 10 nm par TEM.

**Revendications**

1.  Procédé de préparation de particules minérales sous forme de colloïdes en dispersion aqueuse de taille contrôlée à partir d'un précurseur, comprenant :

    a) la mise en solution aqueuse dudit précurseur qui est un sel minéral d'un cation métallique;
    b) la complexation du produit obtenu en a) par au moins un copolymère à bloc hydrosoluble comportant au moins un bloc hydrophyle anionique complexant et au moins un bloc hydrophile nonionique stabilisant ; et,
    c) l'hydrolyse partielle ou totale dudit précurseur pour obtenir une croissance contrôlée des particules minérales sous forme de dispersion aqueuse.

2.  Procédé selon la revendication 1, **caractérisé en ce qu'**il comporte en outre après l'étape a) :

    $a_1$) l'hydrolyse partielle du produit obtenu en a).

3.  Procédé selon la revendication 1 ou 2, **caractérisé en ce que** la taille des particules colloïdes obtenues à la fin de l'étape c) est comprise entre 2 et 500 nm

4.  Procédé selon la revendication 2 ou 3, **caractérisé en ce que** n étant le nombre stoechiométrique de moles de base pour hydrolyser le dit précurseur, n1 moles de base sont utilisées lors de l'étape a) et n2 moles de base sont utilisées lors de l'étape b) $n_1$, $n_2$ et n étant liés par l'équation :

$$n_1 + n_2 = n.$$

5.  Procédé selon la revendication 4, **caractérisé en ce que** $n_1$, $n_2$ et n sont également liés par les équations :

$$0,2 \times n \leq n_1 \leq 0,8\, n\ ;$$

et

$$0,2 \times n \leq n_2 \leq 0,8\, n.$$

6.  Procédé selon l'une quelconque des revendications précédentes, **caractérisé en ce que** la base est un hydroxyde alcalin ou alcalino-terreux.

7.  Procédé selon la revendication 6, **caractérisé en ce que** la base est la soude, la potasse, et l'hydroxyde de calcium.

8.  Procédé selon l'une quelconque des revendications précédentes, **caractérisé en ce que** le taux de copolymère complexant qui est le rapport molaire du groupe complexant du ou des blocs hydrophyle(s) anionique(s) sur le nombre de mole du cation métallique contenu dans le précurseur minéral est compris entre 0,05 et 2, plus particulièrement entre 0,1 et 0,5.

9.  Procédé selon l'une quelconque des revendications précédentes, **caractérisé en ce que**, après l'étape c), ledit procédé comporte en outre :

    d) un mûrissement à une température comprise entre entre 50 °C et une température inférieure ou égale au point d'ébullition de ladite dispersion.

10.  Procédé selon la revendication 9, **caractérisé en ce que** après l'étape c) ou d), ledit procédé comporte en outre :

    e) une concentration de la dispersion.

11.  Procédé selon la revendication 10, **caractérisé en ce que** la concentration est une ultrafiltration, dialyse, séchage et redispersion dans l'eau, précipitation et redispersion dans l'eau, et centrifugation et redispersion dans l'eau .

12.  Procédé selon l'une quelconque des revendications précédentes, **caractérisé en ce que** le cation métallique est le cuivre, l'aluminium, le cérium et le lanthane.

**Claims**

1.  Process for preparing mineral particles in the form of colloids in aqueous dispersion of controlled size from a precursor, comprising:

    a) the step of putting the said precursor, which is a mineral salt of a metal cation, into aqueous solution;
    b) the complexation of the product obtained in a) with at least one water-soluble block copolymer having at least one complexing anionic hydrophilic block and at least one stabilizing nonionic hydrophilic block; and

c) the partial or complete hydrolysis of the said precursor in order to obtain controlled growth of the mineral particles in the form of an aqueous dispersion.

**2.** Process according to Claim 1, **characterized in that** it furthermore includes, after step a):

$a_1$) the partial hydrolysis of the product obtained in a).

**3.** Process according to Claim 1 or 2, **characterized in that** the size of the colloid particles obtained at the end of step c) is between 2 and 500 nm.

**4.** Process according to Claim 2 or 3, **characterized in that** $n_1$ moles of base are used during step a) and $n_2$ moles of base are used during step b), n being the stoichiometric number of moles of base to hydrolyse the said precursor and $n_1$, $n_2$ and n being linked by the equation:

$$n_1 + n_2 = n.$$

**5.** Process according to Claim 4, **characterized in that** $n_1$, $n_2$ and n are also linked by the equations:

$$0.2n \leq n_1 \leq 0.8n;$$

and

$$0.2n \leq n_2 \leq 0.8n.$$

**6.** Process according to any one of the preceding claims, **characterized in that** the base is an alkali or alkaline-earth hydroxide.

**7.** Process according to Claim 6, **characterized in that** the base is sodium hydroxide, potassium hydroxide or calcium hydroxide.

**8.** Process according to any one of the preceding claims, **characterized in that** the amount of complexing copolymer, which is the molar ratio of the complexing group of the anionic hydrophilic block or blocks to the number of moles of the metal cation contained in the mineral precursor, is between 0.05 and 2, more particularly between 0.1 and 0.5.

**9.** Process according to any one of the preceding claims, **characterized in that**, after step c), the said process furthermore includes:

d) a maturation at a temperature of between 50°C and a temperature of less than or equal to the boiling point of the said dispersion.

**10.** Process according to Claim 9, **characterized in that**, after step c) or d), the said process furthermore includes:

e) a step of concentrating the dispersion.

**11.** Process according to Claim 10, **characterized in that** the concentration step is an ultrafiltration, dialysis, drying and redispersion in water, precipitation and redispersion in water and centrifuging and redispersion in water.

**12.** Process according to any one of the preceding claims, **characterized in that** the metal cation is copper, aluminium, cerium or lanthanum.

**Patentansprüche**

**1.** Verfahren der Herstellung mineralischer Partikel in Form von Kolloiden in wässriger Dispersion von kontrollierter Größe, ausgehend von einer Vorstufe, umfassend:

a) in wässrige Lösung Bringen der besagten Vorstufe, die ein Mineralsalz eines metallischen Kations ist;
b) die Komplexierung des in a) erhaltenen Produkts durch mindestens ein wasserlösliches Block-Copolymer, das mindestens einen komplexierenden, anionischen, hydrophilen Block und mindestens einen stabilisierenden, nicht-ionischen, hydrophilen Block aufweist; und
c) die partielle oder vollständige Hydrolyse der besagten Vorstufe, um ein kontrolliertes Wachstum der mineralischen Partikel in wässriger Lösung zu erzielen.

**2.** Verfahren gemäß Anspruch 1, **dadurch gekennzeichnet, dass** es nach Schritt a) außerdem aufweist:

$a_1$) die partielle Hydrolyse des in a) erhaltenen Produkts.

**3.** Verfahren gemäß Anspruch 1 oder 2, **dadurch gekennzeichnet, dass** die Größe der Kolloidpartikel, die am Ende von Schritt c) erhalten werden, zwischen 2 und 500 nm liegt.

**4.** Verfahren gemäß Anspruch 2 oder 3, **dadurch gekennzeichnet, dass** n die stöchiometrische Molzahl an Base für die Hydrolyse von besagter Vorstufe ist, n1 mol Base bei Schritt a) verwendet werden und n2 mol Base bei Schritt b) verwendet werden, wobei $n_1$, $n_2$ und n über die Gleichung:

$$n_1 + n_2 = n$$

miteinander verbunden sind.

5. Verfahren gemäß Anspruch 4, **dadurch gekennzeichnet, dass** $n_1$, $n_2$ und n in gleicher Weise über die Gleichungen:

$$0{,}2 \times n \le n_1 \le 0{,}8\ n;$$

und

$$0{,}2 \times n \le n_2 \le 0{,}8\ n$$

miteinander verbunden sind.

6. Verfahren gemäß einem der vorhergehenden Ansprüche, **dadurch gekennzeichnet, dass** die Base ein Alkali- oder Erdalkalimetallhydroxid ist.

7. Verfahren gemäß Anspruch 6, **dadurch gekennzeichnet, dass** die Base Natronlauge, Kaliumhydroxid und Calciumhydroxid ist.

8. Verfahren gemäß einem der vorhergehenden Ansprüche, **dadurch gekennzeichnet, dass** der Anteil an komplexierendem Copolymer, der dem molaren Verhältnis der komplexierenden Gruppe des oder der anionischen hydrophilen BlocksjBlöcke zur Molzahl des metallischen Kations, das in der mineralischen Vorstufe enthalten ist, entspricht, zwischen 0,05 und 2 liegt, insbesondere zwischen 0,1 und 0,5.

9. Verfahren gemäß einem der vorhergehenden Ansprüche, **dadurch gekennzeichnet, dass** das besagte Verfahren nach dem Schritt c) außerdem aufweist:

d) eine Reifung bei einer Temperatur, die zwischen 50°C und einer Temperatur liegt, die kleiner oder gleich dem Siedepunkt der besagten Dispersion ist.

10. Verfahren gemäß Anspruch 9, **dadurch gekennzeichnet, dass** das besagte Verfahren nach dem Schritt c) oder d) außerdem aufweist:

e) ein Konzentrieren der Dispersion.

11. Verfahren gemäß Anspruch 10, **dadurch gekennzeichnet, dass** das Konzentrieren eine Ultrafiltration, eine Dialyse, eine Trocknung und Redispergieren in Wasser, eine Fällung und Redispergieren in Wasser, und eine Zentrifugation und Redispergieren in Wasser ist.

12. Verfahren gemäß einem der vorhergehenden Ansprüche, **dadurch gekennzeichnet, dass** das metallische Kation Kupfer, Aluminium, Cer und Lanthan ist.